**Europäisches Patentamt**

**European Patent Office**

**Office européen des brevets**

(19)

(11) Veröffentlichungsnummer: **0 155 260**
**A2**

(12) # EUROPÄISCHE PATENTANMELDUNG

(21) Anmeldenummer: **85890043.4**

(22) Anmeldetag: **18.02.85**

(51) Int. Cl.⁴: **B 01 D 13/00**

(30) Priorität: **01.03.84 AT 703/84**

(43) Veröffentlichungstag der Anmeldung: **18.09.85**
**Patentblatt 85/38**

(84) Benannte Vertragsstaaten: **DE FR GB IT NL**

(71) Anmelder: **Vogelbusch Gesellschaft m.b.H.,**
**Blechturmgasse 11, A-1050 Wien (AT)**

(72) Erfinder: **Seewann, Peter Herbert, Neusetzgasse 8/31,**
**A-1100 Wien (AT)**

(74) Vertreter: **Wolfram, Gustav, Dipl.-Ing.,**
**Schwindgasse 7 P.O. Box 205, A-1041 Wien (AT)**

(54) Einrichtung zur Trennung von flüssigen oder gasförmigen Stoffgemischen.

(57) Um bei einer solchen Einrichtung mit einem Gehäuse (1), in welchem eine Mehrzahl von ringförmigen Trägern (8) übereinander gestapelt und zwischen den Trägern Membranen (10) gehaltert sind, Leckverluste in die permeatseitigen Räume zu vermeiden, Wärmezufuhr zu den aufzutrennenden Stoffgemischen während des Trennvorganges zu ermöglichen sowie um eine einfach und schnell demontierbare Trenneinrichtung mit erhöhter Trennleistung und gesteigertem Durchsatzvermögen zu schaffen, ist vorgesehen, dass

– der zentrale Innenraum der Träger (8) mit einem porösen, durchlässigen Material (14) ausgefüllt ist,

– zwischen zwei aufeinanderfolgenden, mit einer Membrane (10) belegten Trägern (8) jeweils ein poröser, durchlässiger Abstandhalter (9) eingesetzt ist,

– die einzelnen Träger (8) periphere Ausnehmungen (11) aufweisen, die bei aufeinanderfolgenden Trägern versetzt zueinander angeordnet sind, und dass

– ein die zentralen Innenräume der Träger verbindender Ableitungskanal für Permeat vorgesehen ist, welcher durch das Gehäuse (1) nach aussen geführt ist.

0155260

- 1 -

**Einrichtung zur Trennung von flüssigen oder gasförmigen Stoffgemischen**

Die Erfindung betrifft eine Einrichtung zur Trennung von flüssigen oder gasförmigen Stoffgemischen durch Membranpermeation mit einem Gehäuse, in welchem eine Mehrzahl von ringförmigen Trägern übereinander gestapelt und zwischen den Trägern Membranen gehaltert sind.

Eine Einrichtung dieser Art ist in der DE-A - 2 358 464 beschrieben. Die ringförmigen Träger dieses bekannten Apparates weisen koaxiale Ausnehmungen auf, in welchen mit einer Membrane beidseitig bedeckte, dünne poröse Scheiben angeordnet sind. Das zu behandelnde Gemisch strömt durch miteinander in Verbindung stehende Kanäle im Randteil der Ringe und durch die zentralen, freien Innenräume der Ringe zwischen den membranbedeckten Scheiben. Das Permeat gelangt durch die dünnen, porösen Scheiben über radiale Nuten im Randteil der Ringe in Sammelkanäle zwischen der Umfangsbegrenzung der Ringe und der Gehäuse- bzw. Behälterwand.

Beim Vorbeiströmen der Stoffgemische an den Membranen - es werden sogenannte permselektive bzw. modifizierte Umkehrosmosemembranen eingesetzt - treten bevorzugt eine oder mehrere Komponenten des Stoffgemisches als Permeat durch die Membranen, wodurch sich eine stufenweise Anreicherung der anderen Komponente(n) im Ausgangsgemisch ergibt. Das aufzutrennende Stoffgemisch wird unter Normaldruck oder unter erhöhtem Druck sowie gegebenenfalls erhitzt gegen die Membranen geführt. Auf der anderen Seite der Membranen wird ein bestimmtes Vakuum eingestellt oder aber ein Schleppgas oder eine geeignete Extraktionsflüssigkeit unter niedrigerem Druck vorbeiströmen gelassen.

Wird ein flüssiges Stoffgemisch unter vergleichsweise
hohem Druck der Vorderseite einer Membran zugeführt und
das Permeat von deren Rückseite mittels einer unter
niedrigem Druck stehenden Extraktionsflüssigkeit abgeführt, spricht man von membranverzögerter Extraktion.

Befindet sich auf einer Seite der Membran eine Flüssigkeit, welche unter dem jeweils eingestellten Druck bis
auf Siedetemperatur erhitzt sein kann und tritt das Permeat in Dampfform aus der Membran aus, so wird dieser
Vorgang als Pervaporation bezeichnet.

Auch Gas- und Dampfgemische lassen sich auf diese Weise
trennen. Bei dem in der DE-A -2 358 464 beschriebenen
Apparat sind zwar die den verschiedenen Trennaufgaben
entsprechenden Membranen relativ leicht gegeneinander
auswechselbar, es bestehen jedoch noch eine Reihe von
Nachteilen:

So sind die in die Ringe eingepaßten dünnen porösen Scheiben gegen mechanische Beanspruchung wenig widerstandsfähig. Die Kanäle im Randteil der Ringe weisen eine geringe lichte Weite auf und neigen schon bei relativ geringer Verunreinigung des aufzutrennenden Stoffgemisches
durch Feststoffe zu Verstopfungen. Feinteilige Inhaltsstoffe der Gemische können die Durchlässigkeit der Membranen erheblich herabsetzen. Weiters ist auch das Problem der Mikroleckverluste in die permeatseitigen Räume
nicht optimal gelöst, da durch den einspeisseitig
herrschenden Druck die Membranen zwar an die dünnen
porösen Scheiben angepreßt werden, die Abdichtung zwischen den einzelnen Ringen und den Membranen jedoch über O-Ringe durch Zusammenpressen des Stapels mittels Zuganker - u.zw. gegen den Druck im zentralen Innenraum der Ringe - erfolgen muß.

Da die aufzutrennenden Stoffgemische in den meisten Fällen auf erhöhter Temperatur gehalten werden müssen, wirkt sich der Wärmeverlust, den das Gemisch beim Durchströmen der bekannten Einrichtung erleidet, besonders ungünstig aus. Eine Wärmezufuhr während des Trennvorganges ist nicht möglich.

Auch bei anderen bekannten Vorrichtungen bestehen die geschilderten Unzukömmlichkeiten.

Die Erfindung stellt sich die Aufgabe, die dargelegten Schwierigkeiten und Unzulänglichkeiten zu überwinden und eine betriebssichere, einfach und schnell demontierbare Trenneinrichtung mit erhöhter Trennleistung und gesteigertem Durchsatzvermögen zu schaffen.

Diese Aufgabe wird bei einer Einrichtung der eingangs definierten Art erfindungsgemäß dadurch gelöst, daß
- der zentrale Innenraum der Träger mit einem porösen, durchlässigen Material ausgefüllt ist,
- zwischen zwei aufeinanderfolgenden, mit einer Membrane belegten Trägern jeweils ein poröser, durchlässiger Abstandhalter eingesetzt ist,
- die einzelnen Träger periphere Ausnehmungen aufweisen, die bei aufeinanderfolgenden Trägern versetzt zueinander angeordnet sind, und daß
- ein die zentralen Innenräume der Träger verbindender Ableitungskanal für Permeat vorgesehen ist, welcher durch das Gehäuse nach außen geführt ist.

Die Membranen werden auf der Seite geringeren Druckes vollflächig von dem porösen, durchlässigen - d.h. offenporigen - Material, welches den zentralen Innenraum der Träger zur Gänze ausfüllt, unterstützt. Das poröse Material weist die gleiche Stärke wie die Träger auf und ist daher mechanisch sehr stabil.

Als Material für die ringförmigen Träger eignet sich jeder Werkstoff, der ausreichend temperaturbeständig und gegenüber den Komponenten der jeweils eingesetzten Gemische resistent ist, beispielsweise Aluminium, Edelstahl und Kunststoffe, wie Polyäthylen, Polypropylen, Polyimide, Polytetrafluoräthylen, Polyvinyldifluorid usw.

Zweckmäßig ist der zentrale Innenraum der Träger mit Kunststoffmaterial in Form einer Kreisscheibe ausgefüllt.

Auch die Abstandhalter sind vorteilhaft aus Kunststoffmaterial gefertigt und ringförmig ausgebildet, wobei für alle diese porösen Teile als Kunststoffmaterial insbesondere Polyäthylen, wie PE 10 (Polyäthylen hoher Dichte) oder Polytetrafluoräthylen verwendet wird. Es kommen für diesen Zweck jedoch auch andere Materialien in Frage, wie Glas- und Metallfritten oder poröse Keramik.

Die Ringgestalt der Abstandhalter ist nicht unbedingt erforderlich, sie können beispielsweise auch Scheibenform aufweisen.

Nach einer bevorzugten Ausführungsform sind im Randteil jedes Trägers in Richtung der Achse des Trägerstapels verlaufende, durch eine schlitzförmige Öffnung mit dem zentralen Innenraum des Trägers in Verbindung stehende Bohrungen vorgesehen, wobei die Bohrungen fluchtend übereinander angeordnet und unter Bildung des Ableitungskanales dichtend miteinander verbunden sind.

Besonders zweckmäßig sind die peripheren Ausnehmungen aufeinanderfolgender Träger jeweils um 180° zueinander versetzt angeordnet.

Die Ausnehmungen können bei kreisringförmigen Trägern einfach die Gestalt eines Kreissegmentes haben, aber auch andere, strömungstechnisch unter Umständen günstigere Formen sind möglich. Nach einer weiteren, besonders vorteilhaften Ausgestaltung der erfindungsgemäßen Einrichtung ist der Mantel des Gehäuses zur Durchleitung eines Heizmediums doppelwandig ausgeführt, wodurch während des Trennvorganges eine unerwünschte Abkühlung des eingesetzten Stoffgemisches vermieden werden kann, ohne gleichzeitig das Permeat zu erwärmen.

Als Membranen werden zumeist sogenannte asymmetrische Membranen eingesetzt, die aus einer sehr dünnen, nur etwa $0,1 - 1$ μm dicken wirksamen Schicht und einer porösen Unterschicht, welche im wesentlichen als Stützschicht dient, aufgebaut sind. Membranen dieser Art sind aus der Technik der umgekehrten Osmose bekannt; die wirksame Schicht kann aus den verschiedensten Polyamiden, Poly- . sulfonen und Cellulosederivaten bestehen.

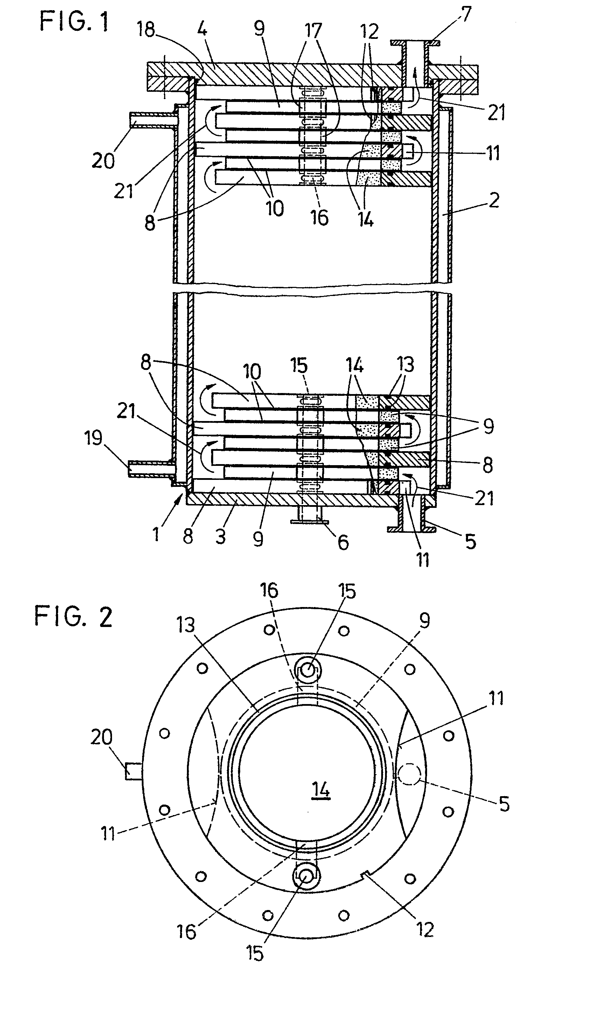

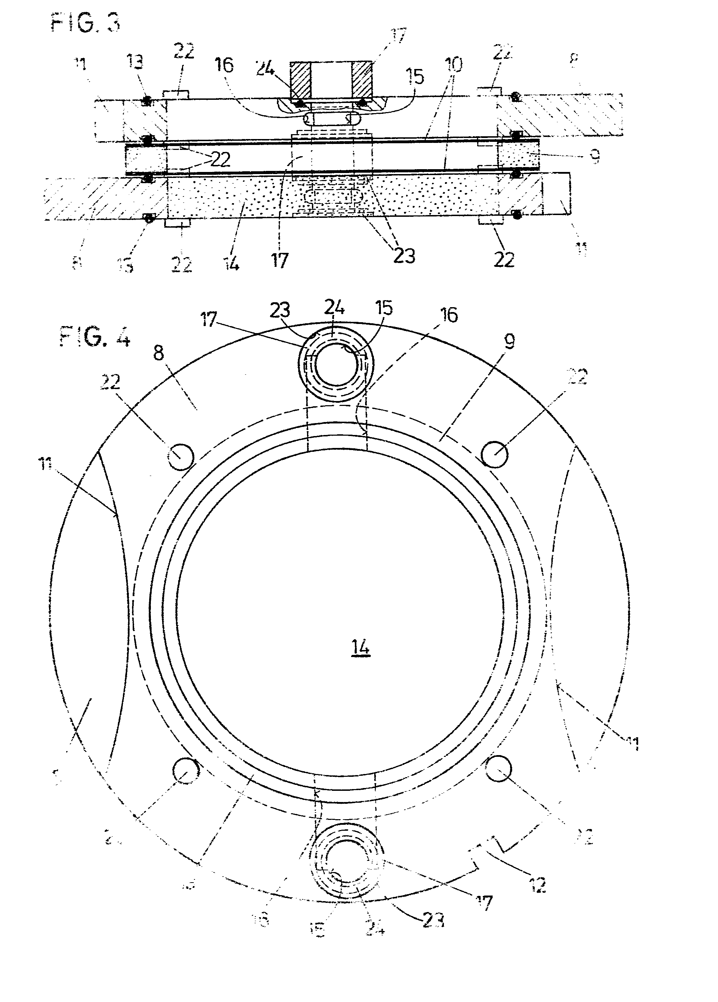

Die Erfindung wird anhand eines in der Zeichnung dargestellten Ausführungsbeispieles näher erläutert. In Fig. 1 ist schematisch ein axialer Schnitt durch eine erfindungsgemäße Einrichtung mit doppelwandigem Gehäusemantel dargestellt. Fig. 2 zeigt die Einrichtung nach Fig. 1 bei abgenommenem Gehäusedeckel von oben. Fig. 3 zeigt vergrößert einen Schnitt durch zwei übereinander gestapelte ringförmige Träger entlang ihrer Achse mit einem dazwischen einschließlich Membranen eingesetzten porösen, gleichfalls ringförmigen Abstandhalter, wobei der zentrale Innenraum eines der Träger mit porösem Material ausgefüllt dargestellt ist, und Fig. 4 stellt eine Draufsicht auf die in Fig. 3 gezeigte Anordnung dar.

Mit 1 ist allgemein ein zylindrisches Gehäuse mit einem doppelwandigen Mantel 2, einem Boden 3 und einem Deckel 4 bezeichnet. Im Gehäuseboden 3 befindet sich ein Zulauf 5 für das zu trennende Stoffgemisch, weiters ein Rohrstutzen 6, welcher Teil eines Ableitungskanales für Permeat ist. Durch den Gehäusedeckel 4 ist eine Ableitung 7 für das Retentat geführt (Fig. 1 und 2).

Im Innenraum des Gehäuses 1 ist eine Mehrzahl von ringförmigen Trägern 8 übereinander gestapelt, wobei zwischen zwei aufeinanderfolgenden Trägern jeweils ein poröser Abstandhalter 9 eingesetzt und zwischen jedem Träger und dem anschließenden Abstandhalter 9 eine Membran 10 gehaltert ist. Die Träger 8 liegen über den größten Teil ihres Umfanges dicht an der Innenwand des Gehäusemantels 2 an. Die periphere Ausnehmung 11 des untersten Trägers 8 ist genau über der Einmündung des Zulaufes 5 angeordnet, die periphere Ausnehmung 11 des folgenden Trägers ist um 180° gegen die Ausnehmung des ersten Trägers versetzt, die Ausnehmung des dritten Trägers liegt wieder genau über jener des ersten Trägers, usw. Um ein Verdrehen der einzelnen Träger zu verhindern, kann an der Innenseite des Gehäusemantels 2 eine schmale Längsleiste vorgesehen sein, die in entsprechende Ausnehmungen 12 der Träger 8 eingreift. Der zentrale Innenraum der Träger 8 ist mit einem porösen, durchlässigen Material 14 ausgefüllt, welches im dargestellten Beispiel die Form einer Kreisscheibe hat.

Die Träger 8 weisen an ihrer Ober- und Unterseite weiters Ringnuten auf, in welche O-Ringe 13 eingelegt sind. Mittels dieser O-Ringe erfolgt die Dichtung zwischen Membrane 10 und zentralem Innenraum der Träger 8. Im Randteil jedes Trägers 8 sind auch zwei einander diametral gegenüberliegende, in Richtung der Achse des Gehäuses bzw. des Trägerstapels verlaufende Bohrungen 15 vorgesehen. Jede Bohrung 15 steht über eine schlitzförmige Öffnung 16 mit dem zentralen Innenraum des jeweiligen Träger 8 in Verbindung. Die übereinander liegenden Bohrungen 15 sind miteinander durch rohrförmige Zwischenstücke 17 mit der gleichen lichten Weite wie die Bohrungen 15 dichtend verbunden. Die Länge der Zwischenstücke 17 entspricht etwa der Dicke der porösen Abstandhalter 9. Die Bohrungen 15 bilden mit den Zwischenstücken 17 einen Ableitungskanal für Permeat, der den Gehäuseboden 3 durchsetzt und über Rohrstutzen 6 nach außen geführt ist.

Die Höhe des Gehäuses 1 ist so bemessen, daß die periphere Ausnehmung 11 des obersten Trägers 8 gerade unter der Ableitung 7 im Deckel 4 des Gehäuses zu liegen kommt. Der Deckel weist an seiner Innenseite eine periphere Ringdichtung 18 auf, so daß er an der Innenseite des Gehäusemantels 2 um geringe Beträge gleiten kann. Durch diese Höhenverstellbarkeit ist eine Variation des Anpreßdruckes, welcher mittels des Deckels auf den Trägerstapel ausgeübt wird, möglich. Die Befestigung des Deckels kann in üblicher Weise mit flanschdurchsetzenden Schraubenverbindungen vorgenommen werden. Im unteren Teil des doppelwandig ausgebildeten Gehäusemantels 2 ist ein Zulauf 19, im oberen Teil ein Ablauf 20 für ein Heizmedium vorgesehen. Der Strömungsweg des eingespeisten Stoffgemisches ist durch die gebogenen Pfeile 21 angedeutet.

In den Fig. 3 und 4 sind die Träger 8, deren Anordnung sowie deren Verbindung noch näher veranschaulicht. An der Ober- und Unterseite der Träger 8 sind je vier Halteorgane in Form von Noppen 22 vorgesehen, die zum zentrischen Einsetzen der Membranen 10 und der Abstandhalter 9 dienen sowie diese gegen Verrutschen sichern. Anstelle der Noppen 22 können auch andere geeignete Halteorgane, beispielsweise kreisringförmige Rippen, vorgesehen sein.

Auch die Zwischenstücke 17 sitzen zweckmäßig in die Bohrungen 15 konzentrisch umgebenden Ausnehmungen 23.

Bestehen die Zwischenstücke 17 - wie bei der dargestellten Ausführungsform - aus starren Rohrstücken, sind zur dichtenden Verbindung der Bohrungen Dichtungen 24 erforderlich. Alternativ ist die Verwendung von elastischen Zwischenstücken 17 möglich, welche keine eigenen Dichtungen benötigen. Es hat sich herausgestellt, daß Viton B$^{®}$ (Fluorelastomer auf Basis von Vinylidenfluorid-Hexafluorpropylen-Copolymerisaten) und Äthylen-Propylen-Copolymerisate für viele Anwendungsfälle als Material für die Dichtungen sehr gut geeignet ist.

Das zu trennende Stoffgemisch strömt durch den Zulauf 5 in das Gehäuseinnere, wo die membranbedeckten Träger 8 einen ständigen Richtungswechsel des strömenden Mediums nach Art von Schikanen erzwingen, da ein Durchfluß nur zwischen den peripheren Ausnehmungen 11 und der Innenbegrenzung des Gehäusemantels 2 möglich ist. Eventuell im Medium vorhandene feste Verunreinigungen und Schwebstoffe werden in den Poren der Abstandhalter 9 größtenteils zurückgehalten, so daß das über die Ableitung 7 im Deckel 4 des Gehäuses abgezogene Retentat weitgehend frei von Verunreinigungen ist und die Membranen nicht verstopft werden. Das Gemisch kann notwendigenfalls unter sehr hohem Druck gehalten werden, ohne Leckverluste oder Beschädigungen der Membranen 10 befürchten zu müssen. Infolge der Druckdifferenz zum Permeatraum, d.h. zum mit porösem Material 14 ausgefüllten zentralen Innenraum der Träger 8 werden die Membranen gleichsinnig mit dem vom Deckel 4 auf den Stapel ausgeübten mechanischen Druck gegen die O-Ringe 13 gepreßt.

Die Bohrungen 15 des zuunterst liegenden Trägers sind über eine in der Zeichnung nicht dargestellte, in die Ausnehmung 23 an der Trägerunterseite eingesetzte Flachdichtung mit den Rohrstutzen 6 dichtend verbunden.

0155260

In der gleichen Weise kann die Abdichtung der Bohrungen im obersten Träger 8 gegen den Deckel erfolgen. Über Rohrstutzen 6 kann Vakuum an die durch die dichtende Verbindung der Bohrungen 15 gebildeten Ableitungskanäle für Permeat und somit an die den ringförmigen Trägern 8 zugewendeten Seiten der Membranen 10 angelegt werden, da die Bohrungen 15 durch die schlitzförmigen Öffnungen mit dem zentralen Innenraum der Träger 8 in Verbindung stehen. Das Permeat kann in bekannter Weise in einer Ausfrierfalle oder mittels eines Molekularsiebes gesammelt werden.

Selbstverständlich ist es beispielsweise auch möglich, in Fortsetzung der Permeat-Ableitungskanäle auch im Deckel 4 des Gehäuses Öffnungen vorzusehen und ein Schleppgas zum Abführen des Permeates durchzuleiten.

Da das zu trennende Stoffgemisch in einer erfindungsgemäßen Einrichtung immer in direktem Kontakt mit der Innenwand des Gehäusemantels 2 steht, kann auf einfachste Weise durch Außenheizung Wärme zugeführt werden. Zur Konstanthaltung der Temperatur des Gemisches ist ein in einem doppelwandig ausgebildeten Mantel 2 zirkulierendes Heizmedium am besten geeignet.

Wird für bestimmte Trennaufgaben eine größere Gesamt-Membranfläche benötigt, kann eine erfindungsgemäße Einrichtung leicht durch Aufsetzen eines weiteren Mantelstückes gleichen Durchmessers verlängert werden, so daß eine größere Anzahl von Trägern und Abstandhaltern in dem auf diese Weise verlängerten Gehäuse Platz finden.

Der Boden 3 des Gehäuses ist bei der gezeigten Ausführungsform mit dem Mantel 2 verschweißt dargestellt. Es ist jedoch auch möglich, ihn - beispielsweise mittels einer Flanschverbindung - abnehmbar auszuführen.

Eine erfindungsgemäße Einrichtung kann beispielsweise zum Absolutieren von Feinsprit mit etwa 94,4 Massen % oder von Industriesprit mit etwa 94,9 Massen % Äthanol verwendet werden. Dabei wird der als Ausgangsgemisch eingesetzte Sprit mit einem Überdruck von 1 bis 4 bar und einer Temperatur, welche nahezu der Siedetemperatur unter Normaldruck entspricht, eingespeist. Abhängend von der Äthanolkonzentration im Ausgangsgemisch und dem Membranmaterial wird eine Gesamt-Membranfläche von 0,3 bis 2 m²/l Endprodukt benötigt, wobei permeatseitig Vakuum angelegt wird. Als Endprodukt (Retentat) wird Absolutalkohol mit 99,7 Massen % Äthanol erhalten, da das im Sprit enthaltene Wasser bevorzugt als Permeat durch die Membran tritt.

Patentansprüche:

1. Einrichtung zur Trennung von flüssigen oder gasförmigen Stoffgemischen durch Membranpermeation mit einem Gehäuse (1), in welchem eine Mehrzahl von ringförmigen Trägern (8) übereinander gestapelt und zwischen den Trägern Membranen (10) gehaltert sind, dadurch gekennzeichnet, daß

- der zentrale Innenraum der Träger (8) mit einem porösen, durchlässigen Material (14) ausgefüllt ist,

- zwischen zwei aufeinanderfolgenden, mit einer Membrane (10) belegten Trägern (8) jeweils ein poröser, durchlässiger Abstandhalter (9) eingesetzt ist,

- die einzelnen Träger (8) periphere Ausnehmungen (11) aufweisen, die bei aufeinanderfolgenden Trägern versetzt zueinander angeordnet sind, und daß

- ein die zentralen Innenräume der Träger verbindender Ableitungskanal für Permeat vorgesehen ist, welcher durch das Gehäuse (1) nach außen geführt ist.

2. Einrichtung nach Anspruch 1, dadurch gekennzeichnet, daß im Randteil jedes Trägers (8)　　　in Richtung der Achse des Trägerstapels verlaufende, durch eine schlitzförmige Öffnung (16) mit dem zentralen Innenraum des Trägers (8) in Verbindung stehende Bohrungen (15) vorgesehen sind, die Bohrungen (15) fluchtend übereinander angeordnet und unter Bildung eines Ableitungskanales dichtend miteinander verbunden sind.

3. Einrichtung nach einem oder beiden der Ansprüche 1 und 2, dadurch gekennzeichnet, daß die peripheren Ausnehmungen (11) aufeinanderfolgender Träger jeweils um 180° zueinander versetzt angeordnet sind.

4. Einrichtung nach einem oder mehreren der Ansprüche

0155260

1 bis 3, dadurch gekennzeichnet, daß der zentrale Innenraum der Träger (8) mit Kunststoffmaterial (14) in Form einer Kreisscheibe ausgefüllt ist.

5. Einrichtung nach einem oder mehreren der Ansprüche 1 bis 4, dadurch gekennzeichnet, daß die Abstandhalter (9) aus Kunststoffmaterial gefertigt und ringförmig ausgebildet sind.

6. Einrichtung nach einem oder beiden der Ansprüche 4 und 5, dadurch gekennzeichnet, daß als Kunststoffmaterial Polyäthylen oder Polytetrafluoräthylen verwendet wird.

7. Einrichtung nach einem oder mehreren der Ansprüche 1 bis 6, dadurch gekennzeichnet, daß der Mantel (2) des Gehäuses (1) zur Durchleitung eines Heizmediums doppelwandig ausgebildet ist.

0155260

FIG. 1

FIG. 2

0155260

FIG. 3

FIG. 4